# EUROPEAN PATENT SPECIFICATION

(11) **EP 4 327 972 B1**
(45) Date of publication and mention of the grant of the patent: **29.07.2026**
(21) Application number: 23192084.4
(22) Date of filing: 18.08.2023
(51) Int. Cl.: B23K 9/04, B23K 9/173, B33Y 10/00, B33Y 30/00, B23K 9/12, B23K 9/29, B23K 103/10

(54) **MULTIPLE WIRE ADDITIVE MANUFACTURING**
GENERATIVE FERTIGUNG MIT MEHREREN DRÄHTEN
FABRICATION ADDITIVE À FILS MULTIPLES

(30) Priority: 18.08.2022 US 202263371838 P
(43) Date of publication of application: 28.02.2024
(73) Proprietor: Relativity Space, Inc., Long Beach, CA 90807 (US)
(72) Inventor: GRUBER, Fritz, Long Beach, 90807 (US); CAMPBELL, Jeffrey, Long Beach, 90807 (US); AGUILAR, Louie, Long Beach, 90807 (US); STENGLINE, Erik, Long Beach, 90807 (US); TONNESLAN, Samuel, Long Beach, 90807 (US); GRAY, Justin, Long Beach, 90807 (US); KROL, Jeremy, Long Beach, 90807 (US)
(74) Representative: EIP

(56) References cited:
- EP-A1- 0 417 468
- CA-A1- 2 839 830
- CN-A- 109 476 085
- DE-A1- 102015 122 135
- DE-A1- 102016 003 465
- US-A1- 2019 160 530

## Description

### FIELD OF THE INVENTION

The disclosure generally relates to welding and 3D metal printing using multiple feed wires.

### BACKGROUND

One implementation of three-dimensional (3D) printing of structures may involve using an energy source to create a weld pool and feeding a metal wire (a feed wire) into the weld pool using a print head while moving the weld pool. Some systems use lasers to add energy to the weld pool. Some systems use electricity to add energy to the weld pool. The systems that use electricity can be similar to welding systems that pass an electric current through the feed wire and into the weld pool. The electric current adds energy to the weld pool as the feed wire is fed into the weld pool. The weld pool can be moved by moving the structure being printed relative to the feed wire, depositing metal along the weld pool's travel path. As the weld pool moves, its trailing edge cools and solidifies. A complete structure can be printed by moving the weld pool along a complex path while providing energy that keeps the weld pool molten and feeding the feed wire into the weld pool. The physics of the deposition process limit the rate at which the feed wire can be fed into the melt pool and the rate at which energy can be added to the weld pool. The physical limitations of the deposition process thereby limit the speed at which structures can be printed. The speed of at which structures can be printed may limit the size of the structures which can be printed.

DE102016003465 describes a method and system for producing workpieces that use a high intensity energy source to create a puddle and employ at least one resistance heated wire that is heated to, or near, its melting temperature and deposited as a droplet into the puddle.

DE102015122135 describes a method for producing a shaped body from a metallic material by means of additive-generative manufacturing.

EP0417468 describes a welding contact tip or a weld nozzle that is provided with a coating comprising a film of tungsten disulfide or other low friction material.

CN109476085 describes a method in which, during the generation of a 3D object, the speed at which a wire is supplied to a hot end of the 3D printer can be adjusted based on a determined amount of wire supplied to the hot end.

CA2839830 describes a cladding system and method where first and second cladding heads are provided, where each cladding head delivers its own respective cladding electrode to a common molten puddle.

US 2019/160530 describes systems and methods whereby a metal deposition device is configured to deposit a metal material during an additive manufacturing process.

### SUMMARY OF THE INVENTION

Many embodiments are directed to additive manufacturing systems and methods of performing additive manufacturing. The present invention is defined by the appended claims.

In some aspects, the techniques described herein relate to a system, wherein the second wire melts in the weld pool to fill in voids in a weld material deposited on the workpiece.

In some aspects, the techniques described herein relate to a system, wherein the second wire feeder is configured to feed the second wire end into a front edge of the weld pool.

In some aspects, the techniques described herein relate to a system, further including a print controller configured to control the second feed rate and an electric power controller configured to control the electric power source.

In some aspects, the techniques described herein relate to a system, wherein: a power value is an amount of electric power in the input electric power; a travel speed value indicates a travel speed of the electrode wire feeder and the second wire feeder relative to the workpiece; the print controller is configured to determine an amount of energy being injected into the weld pool based on the power value and the travel speed value; and the print controller is configured to determine the second feed rate using the determined amount of energy being injected into the weld pool.

In some aspects, the techniques described herein relate to a system, wherein determining the second feed rate makes the weld pool have superior visual characteristics, makes the weld pool free from deformities and contaminants, provides a consistent uniform deposition profile, and/or maximizes a material deposition rate.

In some aspects, the techniques described herein relate to a system, wherein: a power value is an amount of electric power in the input electric power; a travel speed value indicates a travel speed of the electrode wire feeder and the second wire feeder relative to the workpiece; and the print controller is configured to determine the second feed rate using the power value, the travel speed value, and the first feed rate.

In some aspects, the techniques described herein relate to a system, wherein determining the second feed rate maximizes a material deposition rate that is a function of a power value that is an amount of electric power in the input electric power.

In some aspects, the techniques described herein relate to a system, wherein the print controller is further configured to determine the material deposition rate based on the first feed rate, an electrode wire cross-section area, the second feed rate, and a second wire cross-section area.

In some aspects, the techniques described herein relate to a system, further including a defect detector and an electric power controller, wherein: a deposition defect indicates that the power value has exceeded a power value threshold; the defect detector is configured to determine the power value threshold; and the electric power controller is configured to set the power value, outputted by the electric power source, based on the power value threshold.

In some aspects, the techniques described herein relate to a system, further including an edge sensor configured to determine a weld pool edge location, wherein the print controller is configured to adjust the first feed rate, the travel speed, or the second feed rate based on the weld pool edge location and a desired edge location.

In some aspects, the techniques described herein relate to a system, wherein the electrode wire is a first alloy, the second wire is a second alloy, and the print controller is configured to control the first feed rate and the second feed rate to produce a third alloy from the first alloy and the second alloy at a weld pool location.

In some aspects, the techniques described herein relate to a system, wherein the print controller is further configured to produce the third alloy based on the weld pool location in relation to the workpiece.

In some aspects, the techniques described herein relate to a system, further including a shield gas nozzle configured to introduce a shield gas during deposition of the weld material, wherein the second wire feeder is configured to position the second wire so that, when in use, the second wire does not shadow the introduction of the shield gas to the weld pool.

In some aspects, the techniques described herein relate to a system, wherein the insertion angle of the second wire end is between 10 degrees and 20 degrees with respect to the workpiece.

In some aspects, the techniques described herein relate to a system, further including a shield gas nozzle configured to introduce a shield gas during deposition of the weld material, wherein the second wire feeder is configured to position the second wire end at the insertion angle such that the second wire does not substantially shadow the introduction of the shield gas to the weld pool.

In some aspects, the techniques described herein relate to a system, wherein the shield gas nozzle has a coaxial shape so that the radius and volume of the shield gas is increased.

In some aspects, the techniques described herein relate to a system, wherein the coaxial shape of the shield gas nozzle mitigates the shadowing due to the second wire.

In some aspects, the techniques described herein relate to a system, wherein the shield gas nozzle includes a coating
In some aspects, the techniques described herein relate to a system, wherein coating mitigates sticking of material to the shield gas nozzle from sputtering and/or smoking from the weld pool during deposition.

In some aspects, the techniques described herein relate to a system, wherein the coating includes boron nitride and/or graphite.

In some aspects, the techniques described herein relate to a system, wherein the second wire feeder is further configured to position the second wire such that it substantially contacts the workpiece ahead of the weld pool and the weld pool is moved onto the second wire end as the weld pool moves.

In some aspects, the techniques described herein relate to a system, further including one or more positioning sensors to monitor the positioning of the electrode wire.

In some aspects, the techniques described herein relate to a system, wherein the one or more positioning sensors includes an optical sensor for monitoring the axial positioning of the electrode wire with respect to the workpiece.

In some aspects, the techniques described herein relate to a system, wherein the one or more positioning sensors includes a force sensor configured to monitor the axial positioning of the electrode wire with respect to the workpiece.

In some aspects, the techniques described herein relate to a system, wherein the one or more positioning sensors includes a thickness sensor configured to monitor the radial positioning of the electrode wire with respect to the workpiece.

In some aspects, the techniques described herein relate to a system, wherein the thickness sensor includes a laser profile scanner.

### BRIEF DESCRIPTION OF THE DRAWINGS

The description will be more fully understood with reference to the following figures and data graphs, which are presented as various embodiments of the disclosure and should not be construed as a complete recitation of the scope of the disclosure, wherein:
FIG. 1 is a schematic of a deposition system including a print head using two feed wires to deposit material into a weld pool in accordance with an embodiment of the invention.
FIG. 2 is a schematic of a deposition system including the print head of FIG. 1 with two wire feeders being moved to thereby move the weld pool in accordance with an embodiment of the invention.
FIG. 3A schematically illustrates a top down view of the deposition system of FIGS. 1 and 2 in accordance with an embodiment of the invention.
FIG. 3B illustrates a magnified schematic of the deposition system of FIG. 2.
FIG. 4A illustrates schematically illustrates a top down view of the deposition system in accordance with an embodiment not being part of the invention.
FIG. 4B illustrates a magnified schematic of a deposition system in accordance with an embodiment not being part of the invention.
FIG. 5 is a schematic of a deposition system illustrating the workpiece being moved relative to an electrode wire feeder to thereby move a weld pool, while a second wire feeder deposits additional material into the weld pool in accordance with an embodiment of the invention.
FIG. 6A is a schematic of a top down view of a multi-wire deposition system in accordance with an embodiment of the invention.
FIG. 6B is a schematic of a multi-wire deposition system in accordance with an embodiment of the invention.
FIG. 7 is a diagram that illustrates equations that model a relationship between a Q value and other parameters of a two-wire deposition process.
FIG. 8 is a high-level diagram illustrating a second feed rate estimator that determines a feed rate for the second wire.
FIG. 9 is a high-level diagram that illustrates using a defect detector to optimize input electric power.
FIG. 10 is a high-level diagram that illustrates using edge sensors to optimize input electric power and other process parameters.
FIG. 11 is a high-level diagram that illustrates using an alloy schedule to deposit different alloys at different locations in a structure.
FIG. 12 schematically illustrates different positionings of the print head with respect to the workpiece to demonstrate the effects of gravity on the melt pool.
FIG. 13A illustrates a schematic of a system for printing with a print head in accordance with an embodiment of the invention.
FIG. 13B illustrates a schematic perspective view of the workpiece during building with the system of FIG. 13A.
FIG. 14 is a perspective view of a schematic of an example horizontal print system.
FIG. 15 is a flow chart of a method for depositing material using multiple feed wires.

### DETAILED DESCRIPTION

It will be understood that the components of the embodiments as generally described herein and illustrated in the drawings may be arranged and designed in different configurations. Thus, the following description of various embodiments, as represented in the drawings, is not intended to limit the scope of the disclosure but is merely representative of various embodiments. While the various aspects of the embodiments are presented in drawings, the drawings are not necessarily drawn to scale unless specifically indicated.

Reference throughout this specification to features, advantages, or similar language does not imply that a feature or advantage that may be only realized with a single embodiment of the present invention. These features and/or advantages may be or are in another embodiment of the invention.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment. Thus, the phrases "in one embodiment", "in an embodiment", and similar language throughout this specification may, but do not necessarily, all refer to the same embodiment.

Recently, large 3D metal printers have been produced for printing large 3D structures. An example implementation uses wire-arc additive manufacturing (WAAM). Other example implementations of "additive layer manufacturing" using large 3D metal printers are described in U.S. Patent Application No. 18/146,292, filed December 23, 2022. The applicant has demonstrated that such large 3D metal printers can print structures 2.75 m (9 ft) or more in diameter and 4.5 m (15 ft) or more in length. With such large 3D metal printers, the printing process involves moving a weld pool along a path while feeding material into the weld pool. The print envelope of such large 3D metal printers greatly exceeds the print envelope of other printing processes such as direct metal laser sintering (DMLS), also called laser powder bed fusion (LPBF), which are 3D metal printers that typically have a print envelope less than or equal to 600 mm diameter by 950 mm in length. With such large 3D metal printers, it is desirable to print the structures quickly such that more structures can be printed within a time period, thereby improving the return on investment on building the printers, printing facilities, etc. A structure may include a known amount of material. The material may include various materials such as aluminum (e.g. aluminum alloys) or nickel (e.g. Inconel).

An example composition may include from about 0.23 to about 0.37 wt% Sc; from about 0.11 to about 0.19 wt% Zr; from about 4.1 to about 5.6 wt% Mg; from about 0.1 to about 1.0 wt% Mn; and less than or equal to about 0.1 wt% of each of Si, Fe, Cu, Ti, Be, Cd, Hg, Ag, B, Be, Zn, Li, and/or lanthanide group elements based on the total weight of the composition; with the balance of the composition being Al. In some embodiments, after T5 heat treatment, and in the absence of a homogenization heat treatment, the composition has a yield strength of greater than or equal to about 240 MPa (35k PSI) when determined according to ASTM E8 or an equivalent thereof on a workpiece comprising the composition having a thickness 0.05" ≤ x ≤ 0.375".

The composition may include less than or equal to about 0.2 wt% Cr, based on the total weight of the composition. In some embodiments, the composition includes less than or equal to about 0.002 wt% B. In some embodiments, the composition further includes less than or equal to about 0.0005 wt% Be. In some embodiments, a ratio of Zr to Sc is less than or equal to about 0.63, less than or equal to about 0.51, less than or equal to about 0.47, or less than or equal to about 0.41, and greater than or equal to about 0.33, or greater than or equal to about 0.38, when determined according to the formula: [Zr wt% / Sc wt%]. In some embodiments, a ratio of Cu to Cr is less than or equal to about 0.41, less than or equal to about 0.33, or less than or equal to about 0.27, and greater than or equal to about 0.05, or greater than or equal to about 0.12, when determined according to the formula [Cu wt% / Cr wt%].

The total composition may include from about 0.1 wt% to 1.0 wt% Mn. In some embodiments, the composition includes greater than or equal to about 0.15 wt% Mn, greater than or equal to about 0.20 wt% Mn, greater than or equal to about 0.25 wt% Mn, or greater than or equal to about 0.3 wt% Mn, greater than or equal to about 0.35 wt% Mn, greater than or equal to about 0.40 wt% Mn, greater than or equal to about 0.45 wt% Mn, greater than or equal to about 0.50 wt% Mn, greater than or equal to about 0.60 wt% Mn, greater than or equal to about 0.65 wt% Mn, greater than or equal to about 0.70 wt% Mn, greater than or equal to about 0.75 wt% Mn, greater than or equal to about 0.80 wt% Mn, greater than or equal to about 0.85 wt% Mn, or greater than or equal to about 0.90 wt% Mn, and less than or equal to about 1 wt%, or less than or equal to about 0.95 wt% Mn.

In some embodiments, the composition includes from about 0.13 wt% Mn to about 0.48 wt% Mn. In some embodiments, the composition includes from about 0.22 wt% Mn to about 0.42 wt% Mn. In some embodiments, the composition includes from about 0.53 Wt% Mn to about 0.82 wt% Mn. In some embodiments, the composition comprises from about 0.64 Wt% Mn to about 0.77 wt% Mn.

The total composition may include from about 0.23 wt% to 37 wt% Sc. In some embodiments, the composition includes from about 0.25 wt% Sc to about 0.36 wt% Sc. In some embodiments, the composition includes from about 0.27 wt% Sc to about 0.35 wt% Sc. In some embodiments, the composition includes from about 0.30 wt% Sc to about 0.34 wt% Sc, based on the total amount of the composition.

In some embodiments, the composition includes less than or equal to about 0.0005 wt% Be based on the total amount of the composition. In some embodiments, the composition includes less than or equal to about 0.0003 wt% Be, or less than or equal to about 0.0003 wt% Be, and greater than or equal to about 0.0001 wt% Be, based on the total amount of the composition.

In some embodiments, the composition further includes less than or equal to about 0.05 wt% Si, based on the total amount of the composition present. In some embodiments, the composition further includes an amount of one or more of Y, Nb, V, Ag, Ti, or a combination thereof, wherein a total amount of these elements is less than or equal to about 0.5 wt%, based on the total amount of the composition present.

In some embodiments, a ratio of the combination of Zr and Ti present to Sc is less than or equal to about 0.3, when determined according to the formula [(Zr wt% + Ti wt%) / Sc wt%].

In some embodiments, the composition is formed into and/or is physically present as a wire, e.g., a welding wire suitable for use in additive manufacturing, having an average diameter of less than or equal to about 2 mm. In some embodiments, the wire formed from the composition has a spooling cast from about 25 to 50 cm, and/or a spooling helix of less than or equal to 0.1 of the spooling cast, when determined according to AWS A5. 10, or an equivalent thereof.

In some embodiments, after the T5 heat treatment, the composition has a degree of sensitization (DoS) mass loss of less than or equal to about 15 mg/cm², when determined according to ASTM G67, or an equivalent thereof.

In some embodiments, a maximum temperature of the T5 heat treatment utilized to produce an article including the composition is less than or equal to about 335 °C (635 °F). A maximum time of the T5 heat treatment may be greater than or equal to about 10 minutes and less than or equal to about 24 hours. In some embodiments, a spooled wire includes the composition of one or more of the composition disclosed herein.

More specific examples of compositions are disclosed in U.S. App. No. 17/929,558, entitled "Aluminum Alloy Compositions, Articles Therefrom, and Methods of Producing Articles Therefrom" and filed Sept. 2, 2022.

In one example, a structure may include 1000 kilograms of aluminum. The feed rate, WFS_{electrode}, is the rate at which wire is fed into the weld pool. For example, the feed rate can be 1 cm/sec. The wire has a cross-section area. For example, an aluminum wire with a square cross-section that is 0.1 cm per side has a 0.01 cm² cross-section. Feeding such a wire into the weld pool at 1 cm/sec deposits 0.1 cm³ of aluminum per second. The density of aluminum, ρₐₗᵤₘᵢₙᵤₘ, is 2.71 g/cm³. Note that this is the density of pure aluminum and that alloys and other metals will have different densities. The example process is therefore depositing aluminum at a rate of 0.271 g/sec. It will take 1025 hours to print the 1000 kg structure.

The feed wire carrying electrical energy into the weld pool is the electrode wire (also characterized in this disclosure as a hot wire). The deposition rate can be increased by increasing the feed rate of the electrode wire but increasing that feed rate has a side effect of increasing the input electrical current. In welding, this is known as burn-off. The input current, I (capital letter i), is therefore a function of the electrode wire feed rate (WFS_{electrode}). The relationship between the input current and the feed rate is called the wire's burn-off characteristic. Those practiced in welding using feed wires are familiar with burn-off and the burn-off characteristic of electrode wires. The end result is that the physics of the welding process limit the electrode wire feed rate because high currents can result in welding defects and other problems.

Various embodiments of the disclosure include additional feed wires, which can be used to deposit additional material into the weld pool. In these instances, the total deposition rate is the rate at which material is deposited using all of the feed wires. The inventors discovered that one or more additional feed wires can be used. In this regard, at least a second feed wire can be fed into the weld pool. The second feed wire is according to the invention a cold wire because the second feed wire does not carry electrical energy into the weld pool.. In some embodiments, the electrical energy carried by the electrode wire (described above) is sufficient to melt the cold wire (the second feed wire) without providing electrical energy to the cold wire. In some embodiments, the second feed wire can be compositionally and structurally identical to the electrode wire. In some embodiments, the second feed wire may be compositionally and/or structurally different from the electrode wire. For example, the second feed wire can be of a different material than the electrode wire and/or have a different diameter than the electrode wire. In some embodiments, the second feed wire can be fed into the weld pool at the same rate as the electrode wire, which results in double the printing rate and thus the printing time may be cut in half. Other rates are within the scope of the invention, however, and the rate at which the second wire can be fed into the weld pool is a parameter that can be determined based on a mathematical model of the two-wire deposition process and the other process parameters. Using the mathematical model saves considerable development time because otherwise a great deal of experimentation may be carried out to map out the second wire feed rate as a function of the other process parameters such as input electric power and the electrode feed rate. Even more experimentation may be beneficial when different wires with different burn-off characteristics are used.

In 3D printing, a toolpath file can be used to specify the actions that printing components are to take, the order in which the actions are to be taken, and when each action is to be taken. For example, a first action can be to move the print head along a specified path at a specified travel speed. At the same time, wire feeders can feed wires at specified rates and the electrode current and voltage produced by an electric power source can be set. Another action can be taken when the print head completes its movement along the first path such that the print head moves along a different specified path at the same or a different specified travel speed. Changes in the feed rates and input electric power can be set to occur at various locations along the specified travel paths. Those familiar with 3D printing are familiar with the creation of and contents of toolpath files. Common toolpath file formats include GCODE, X3G, etc.

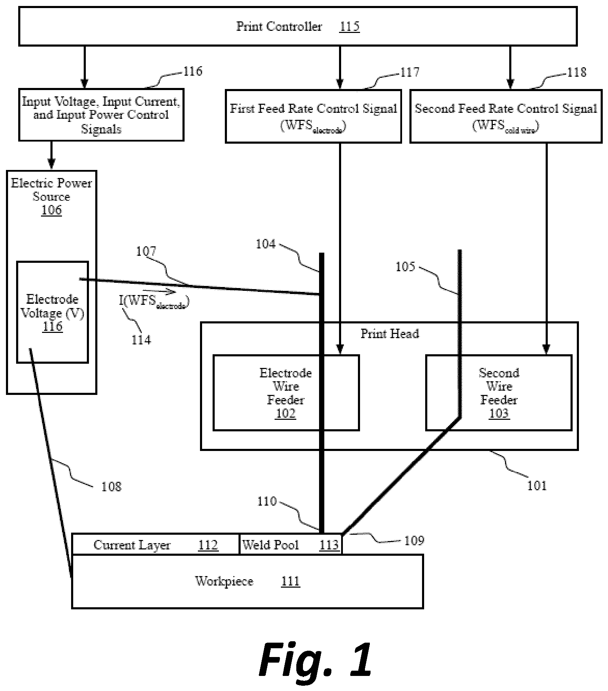

FIG. 1 is a schematic of a deposition system including a print head 101 using two feed wires to deposit material into a weld pool in accordance with an embodiment of the invention. The print controller 115 can interpret a toolpath file and can control various components of a 3D printer in accordance with the toolpath file. Based on the toolpath file, the print controller 115 can output certain control signals at certain times or points in the print. The control signals may be analog signals or digital signals. Signals (e.g., control signals) may indicate or encode values (e.g., control values). The print controller 115 can send control signals to other components that can receive those control signals. An electric power source may receive control signals such as an input voltage signal, an input current signal, an input power control signal, etc. from the print controller 115. Based on the control values from the print controller 115, the electric power source 106 can produce an electrode voltage 116 and an electrode current, I(WFS_{electrode}). The electrode current 114 can pass through an electrode cable 107 to the electrode wire 104. The electrode current 114 may be manipulated through the electrode wire feed rate (WFS_{electrode}).

A print head 101 can include an electrode wire feeder 102 and a second wire feeder 103. The print head 101 may receive control signals such as a first feed rate control signal 117 and a second feed rate control signal 118 from the print controller 115. Based on the control values from the print controller 115, the electrode wire feeder 102 may feed an electrode wire 104 at the first feed rate WFS_{electrode}. The electrode current 114 can pass from the electric power source 106, through the electrode cable 107, through the electrode wire 104, into the workpiece 111, through the work cable 108, and back to the electric power source 106. In some embodiments, the electric current flows in a direction opposite of that indicated in FIG. 1. The electrode wire thereby delivers input electric power to the electrode end 110 where the electrode wire 104 melts into a weld pool 113. The weld pool is a volume of molten metal on the workpiece 111. Moving the workpiece 111 relative to the print head 101 moves the electrode end 110 and thereby moves the weld pool 113 relative to the workpiece 111. As the weld pool moves, an amount of cooling metal remains behind and solidifies. The workpiece can be built up layer by layer. The current layer 112 is the layer currently being deposited on the workpiece 111.

As discussed above, a second feed wire 105 may be utilized to increase the deposition rate onto the workpiece 111. Examples of systems and methods for two wire deposition are described in U.S. Pat. Pub. No. 2023/0173601, entitled "Systems and methods for increasing deposition rates using multiple feed wires and deposition" and filed Dec. 7, 2021.

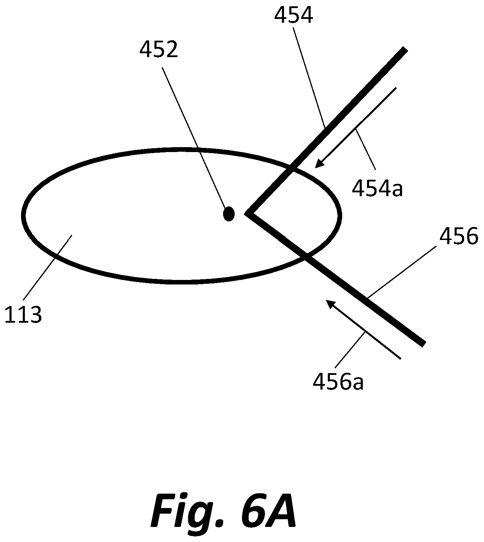

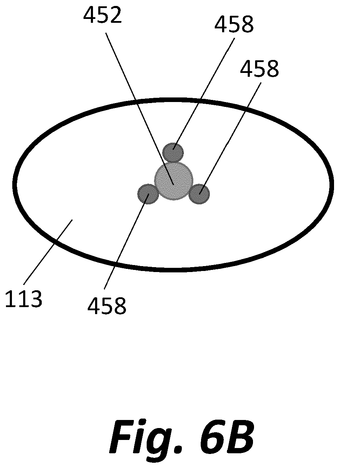

In some embodiments, more wires such as a third and/or fourth feed wire, in addition to the second feed wire 105, can also be utilized to increase further the deposition rate onto the workpiece 111. The third and/or fourth feed wire may not have a voltage applied to it/them or may have a lower voltage than the electrode wire 104 applied to it/them, similar to the second feed wire 105. In embodiments incorporating a third and/or fourth feed wire, the voltage applied to each wire does not need to be the same. For example, a voltage can be applied to the second feed wire 105 but not to the third feed wire or a different voltage can be applied to the third feed wire than to the second feed wire 105; likewise, if utilized, no voltage may be applied to the fourth feed wire or a different voltage can be applied to the fourth feed wire than the second feed wire 105 and/or third feed wire. Examples of different configurations which include a third and/or fourth feed wire are described in connection with FIGS. 6A and 6B.

Based on the control values (e.g., second feed rate control signal 118) from the print controller 115, the second wire feeder 103 may feed the second wire 105 at the second feed rate WFS_{cold wire}. The second wire end 109 is also fed into the weld pool 113 where it melts. The second wire end 109 is melted by the heat energy in the weld pool. That heat energy is produced by the electrode current 114. In the illustrated embodiment, and according to the invention, the second wire 105 carries no electric current that adds energy to the weld pool. In some embodiments, an electric current may be present in the second wire 105. In some embodiments, the electric current may be used to preheat the second wire 105. In some embodiments, shield gas may be utilized while the deposition takes place. The shield gas may be an inert gas (e.g. helium or argon). In some embodiments, a nozzle may be used which accommodates the electrode wire 104 and maintains a flow of shield gas around the weld pool 113. The shield gas may be used to prevent unwanted oxidation reactions during the deposition. However, as will be discussed below, the introduction of the second wire 105 may create shadows for the shield gas.

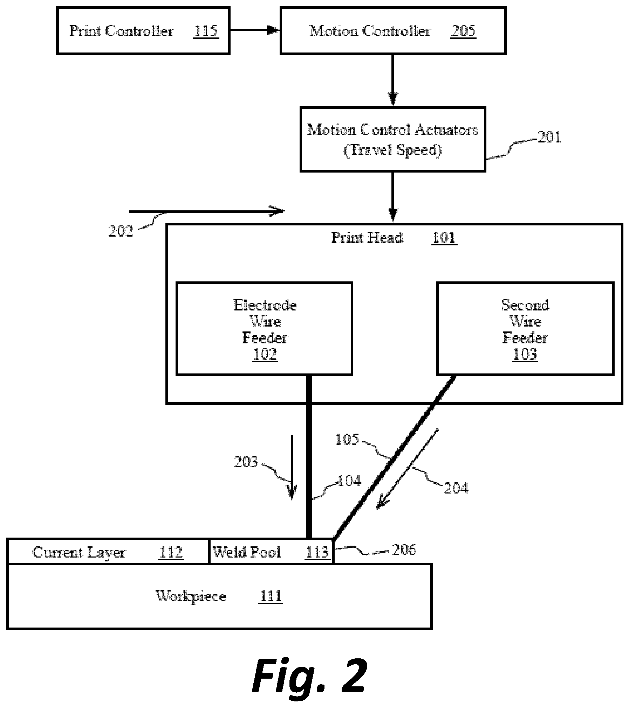

FIG. 2 is a schematic of a deposition system including the print head 101 of FIG. 1 with two wire feeders being moved thereby moving the weld pool 113 in accordance with an embodiment of the invention. A motion controller 205 that is controlled by the print controller 115 may control actuators such as motion control actuators 201. The motion control actuators 201 may be servo motors, stepper motors, hydraulic cylinders, or another actuator means for actuating motion. The motion control actuators 201 can move the print head 101 relative to the workpiece 111. The speed at which the print head 101 moves relative to the workpiece 111 is the travel speed 202. In some embodiments, the print head 101 may be moved while the workpiece 111 remains stationary to produce the travel speed 202. In some embodiments, the workpiece 111 may move while the print head 101 may remain in a certain orientation to produce the travel speed 202. The workpiece 111 may be rotated in a circular motion while the print head 101 remains in a certain orientation. As the print head 101 moves relative to the workpiece 111, the electrode wire 104 can be fed into the weld pool 113 at a first feed rate 203 and the second wire 105 can be fed into the weld pool at a second feed rate 204. FIG. 2 shows the electrode wire 104 and the second wire 105 being fed into the leading edge 206 of the weld pool 113 with the electrode wire 104 behind the second wire 105.

In at least one embodiment, the second wire feeder 103 is controlled by motor actuation or another suitable actuator, while a robot (to which print head 101 is mounted) controls the movement of first wire feeder 102. For example, second wire feeder 103 can be mounted under first wire feeder 102 and utilize a separate movement actuator that can manipulate the position of second wire feeder 103 independent of first wire feeder 102.

In some embodiments, a force sensor may be utilized to calculate at least one of the first feed rate (WFS_{electrode}), the second feed rate (WFS_{cold wire}), and/or the travel speed of the print head 101. The force sensor may be utilized to provide the amount of force that the second wire 105 applies to the workpiece 111. In some examples, the force sensor is utilized to determine whether there is a wire feed issue (e.g. the wire not feeding properly). However, data from the force sensor may also be used to determine the proper positioning of the second wire 105. For example, if a threshold of force is crossed, the height of the second wire 105 with respect to the workpiece 111 may be increased or decreased. This may be performed by increasing or decreasing the second feed rate (WFS_{cold wire}). Or, the positioning of the second wire 105 may be altered with respect to the electrode wire 104.

In some embodiments, there may also be one or more positioning sensors to sense the positioning of the electrode wire 104. It may be advantageous to monitor the positioning of the electrode wire 104 with respect to the workpiece 111 to monitor whether the electrode wire 104 is both adequately axially positioned and radially positioned during the print. Axial positioning refers to whether the electrode wire 104 is positioned too high or too low with respect to the workpiece 111. The one or more positioning sensors may include an optical sensor (e.g. a camera) which monitor the axial position of the electrode wire 104 with respect to the workpiece 111. The one or more positioning sensors may include a force sensor which may be configured to monitor the axial positioning of the electrode wire 104 with respect to the workpiece 111. For example, if a threshold of force is crossed, it may be determined that the axial positioning of the electrode wire 104 may be incorrect and the height of electrode wire 104 with respect to the workpiece 111 may be increased or decreased. This may be performed by increasing or decreasing the first feed rate (WFS_{electrode}). Or, the positioning of the electrode wire 104 may be altered with respect to the second wire 105.

Radial positioning refers to whether the electrode wire 104 is positioned in the correct horizontal position with respect to the workpiece 111. The electrode wire 104 may be positioned off center from the workpiece and thus not printing in the proper positioning. Thus, proper radial positioning is advantageous to increasing print quality. The one or more positioning sensors may include a thickness sensor which may be utilized to sense radial positioning. The thickness sensor may be a laser profile scanner which may be used to determine where the boundaries in space are of the sidewalls of the workpiece 111. If the thickness sensor senses that the radial positioning of the electrode wire 104 is incorrect, the radial positioning of the electrode wire 104 is altered.

As illustrated in FIG. 2, the second wire 105 is according to the invention fed into the weld pool 113 ahead of the electrode wire 104. However, in some embodiments, but not according to the invention, the second wire 105 may be fed into the weld pool 113 behind the electrode wire 104. For example, the second wire 105 may be fed into the weld pool 113 behind the electrode wire 104 and behind the leading edge 206 (further described below) of the weld pool 113.

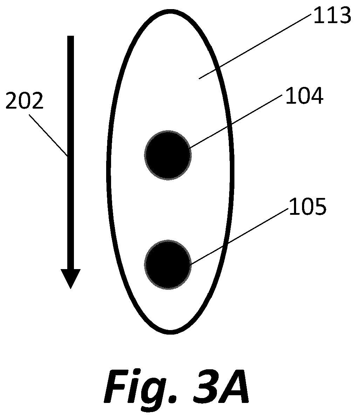

The inventors discovered that certain material types benefit from the second wire 105 being fed behind the electrode wire 104 and certain material types benefit from being fed from in front of the electrode wire 104. FIG. 3A schematically illustrates a top down view of the deposition system of FIGS. 1 and 2 in accordance with an embodiment of the invention. As illustrated, the second wire 105 is fed into the weld pool 113 ahead of the electrode wire 104.

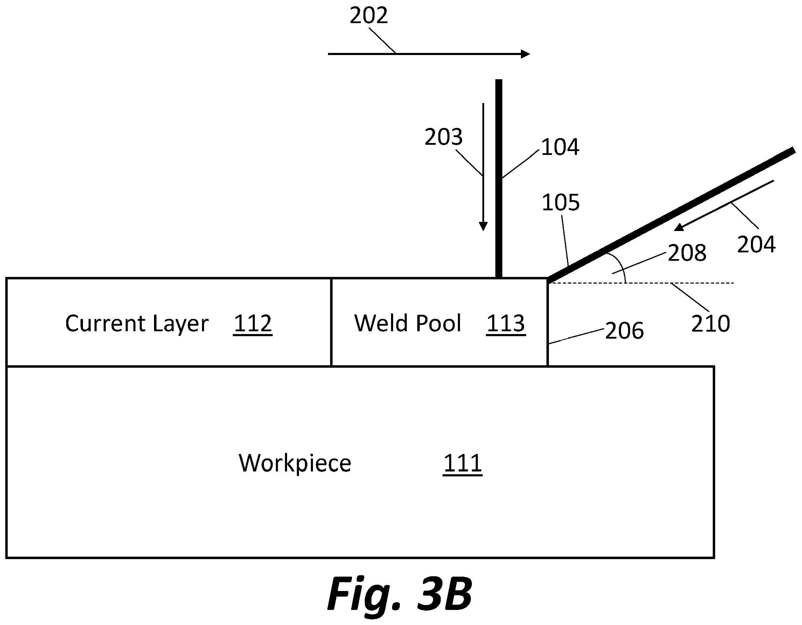

The inventors discovered that, in cases where the second wire 105 is fed in front of the electrode wire 104, certain angles that the second wire 105 contacts the weld pool 113 are more beneficial than others. FIG. 3B illustrates a magnified schematic of the deposition system of FIG. 2. To simplify the diagram, many components have not been shown and are illustrated in detail in FIGS. 1 and 2. As is illustrated, the second wire 105 may be fed in a certain angle 208 with respect to a horizontal line 210 extending from the weld pool 113. The inventors discovered that, when the second wire 105 is fed in front of the electrode wire 104, the placement of the second wire 105 in front of the electrode wire 104 at a shallow angle has implications for the effectiveness of the shield gas. If the angle 208 is too high the second wire 105 may create shadows on the weld pool 113 where the shield gas is prevented from flowing onto the weld pool 113, which may lead to defects. Further, if the angle 208 is too high, the second wire 105 may not contact enough of the weld pool 113 to sufficiently melt. The more vertically the second wire 105 enters the weld pool 113, the less time the second wire 105 has to melt before contacting the workpiece 111. Ideally, the weld pool 113 completely melts the second wire 105 and solid portions of the second wire 105 do not contact the workpiece 111. However, if the angle 208 is too low, the second wire 105 may impinge on the workpiece 111 which may damage the workpiece 111 or make it difficult to properly position the second wire 105. In some embodiments, the angle 208 may be between 8-22 degrees, 9-21 degrees, or 10-20 degrees, with these ranges inclusive of their endpoints. In some embodiments, the angle 208 may be greater than or equal to 10 degrees. In some embodiments, the angle 208 may be about 10 degrees. In some embodiments, the second wire 105 may be fed almost parallel to the workpiece 111 which would make the angle 208 substantially zero.

Feeding the second wire 105 in front or behind the electrode wire 104 may have advantages over one another in certain situations, but the invention only covers the embodiment of feeding the second wire 105 in front of the electrode wire 104. Further, the exact feed location of the second wire 105 has certain implications. For example, positioning the electrode wire 104 ahead of the second wire 105 may deposit energy at the very forward edge of the melt pool 113 and may improve adhesion between the layers. Positioning the second wire 105 ahead of the electrode wire 104 may help ensure that the material deposited by the second wire passes through the hottest sections of the weld pool 113. Feeding the second wire 105 into the weld pool 113 behind the leading edge 206 may help control the cooling profile behind the leading edge 206.

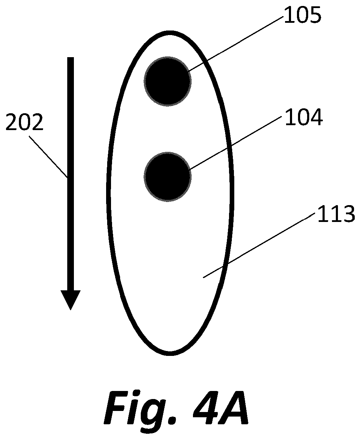

As noted previously, certain material types benefit from the second wire 105 being fed behind the electrode wire 104 and certain material types benefit from being fed from in front of the electrode wire 104. FIG. 4A schematically illustrates a top down view of the deposition system in accordance with an embodiment not being part of the invention. As illustrated, the second wire 105 is fed into the weld pool 113 behind the electrode wire 104. The second wire 105 may be a material with a higher melting temperature and may be slower cooling, which makes it beneficial to feed behind the electrode wire 104. For example, the inventors discovered that, when the second wire 105 includes Inconel (Ni-Cr), the second wire 105 may be fed from behind the electrode wire 104. Further, when the second wire 105 includes a ferrite material, the second wire 105 may be fed behind the electrode wire 104. Further, when the second wire 105 includes titanium, the second wire 105 may be fed behind the electrode wire 104.

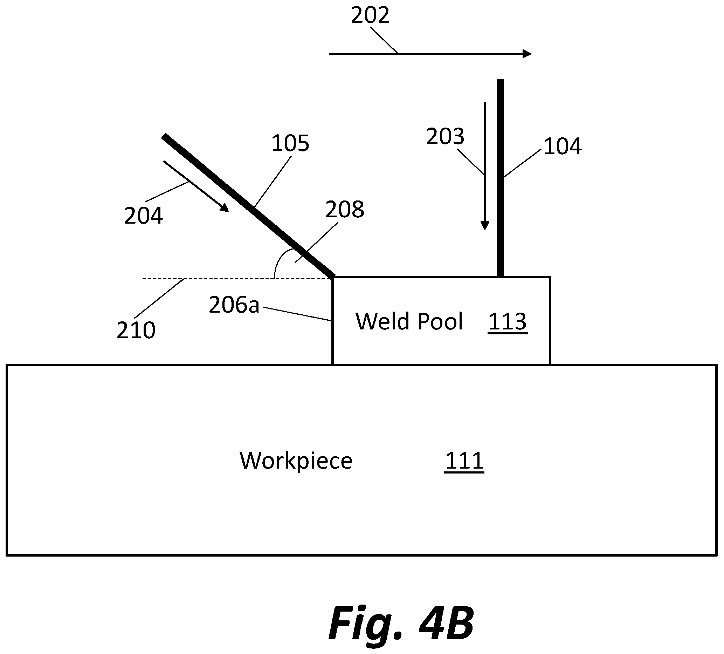

FIG. 4B illustrates a magnified schematic of a deposition system in accordance with an embodiment not being part of the invention. Similar to in FIG. 3B, this deposition system includes the features of the deposition system described in connection with FIGS. 1 and 2. However, the second wire 105 is fed behind the electrode wire 104 at a trailing edge 206a of the weld pool 113. While the current layer 112 has been omitted to better illustrate the placement of the second wire 105, it is understood that the current layer 112 would be present similar to that in FIGS. 1, 2, and 3B. In some embodiments, when the second wire 105 is a material with a higher melting temperature and is slower cooling, the second wire 105 may benefit from preheating before entering the melt pool 113. The second wire 105 may be preheated by applying a voltage to the second wire 105 similar to the electrode wire 104. The voltage may not be enough, by itself, to heat the second wire 105 to melting; however introduction to the melt pool 113 may further heat the second wire 105 causing it to melt. As with the description of FIG. 3B, the second wire 105 may be fed in a certain angle 208 with respect to a horizontal line 210 extending from the weld pool 113.

The inventors discovered that positioning the second wire 105 before the electrode wire 104 does not shadow the shield gas and thus the angle 208 may be higher than that described in connection with Fig. 3B. However, feeding the second wire 105 too shallowly may result in disruptions to the deposition process. When the second wire 105 is preheated, the second wire 105 may deposit too early in the weld pool 113, resulting in the material balling up due to the thermal energy of the arc, which can cause large amounts of material to be fed in inconsistently. However, if the angle 208 is too high, the second wire may not contact enough of the weld pool 113 to sufficiently melt. The more vertically the second wire 105 enters the weld pool 113, the less time the second wire 105 has to melt before contacting the workpiece 111. Ideally, the weld pool 113 completely melts the second wire 105 and solid portions of the second wire 105 do not contact the workpiece 111. In some embodiments, the angle 208 may be 30-50 degrees, 32-48 degrees, or 33-47 degrees, with the ranges inclusive of their endpoints. In some embodiments, the angle 208 may be 45 degrees or thereabout. In some embodiments, the angle 208 may be greater than 20 degrees or thereabout.

When the second wire 105 is made of a lower melting temperature and faster cooling material than the first wire, the second wire 105 is fed from in front the electrode wire 104. This configuration is illustrated and described in detail in connection with FIGS. 1, 2, and 3B. Without limitation to any particular theory, materials that cool quickly create defects (e.g. crusts) on the top of the new current layer. Having the second wire 105 come in from the front means there may be more precision with respect to the height of the workpiece 111: too high and the weld pool 113 may be interrupted.

For example, the inventors discovered that when the second wire 105 includes aluminum, such as defined in the present invention, the second wire 105 may be fed from the front of the electrode wire 104. Also, when the second wire 105 includes a non-ferrite material, the second wire 105 may be fed from in front of the electrode wire 104. Further, when the second wire 105 is copper based (e.g. bronze), the second wire 105 may be fed from in front of the electrode wire 104.

In some examples, it may be beneficial to feed the second wire 105 from in front of the electrode wire 104 when the second wire 105 includes the example composition discussed above and described in U.S. Patent Application No. 17/929,558.

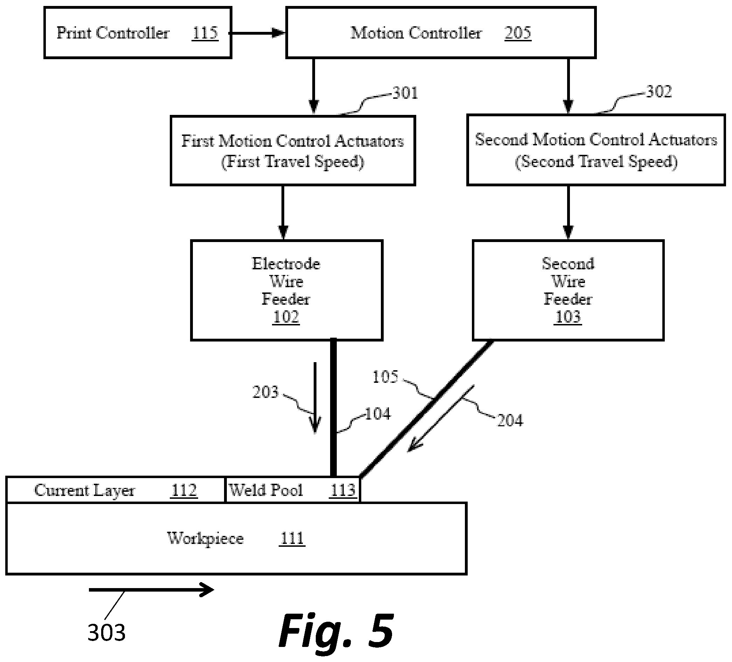

FIG. 5 is a schematic of a deposition system illustrating the workpiece 111 being moved relative to an electrode wire feeder 102 to thereby move a weld pool 113 while a second wire feeder 103 deposits additional material into the weld pool 113 in accordance with an embodiment of the invention. The motion controller 205 may be controlled by the print controller 115 and may in turn control actuators such as first motion control actuators 301 and second motion control actuators 302. The optional first motion control actuators 301 can move the electrode wire feeder 102 relative to the workpiece 111. Moving the electrode wire feeder 102 relative to the workpiece 111 also moves the weld pool 113 relative to the workpiece 111. Alternative suitable movement configurations are described above with reference to FIG. 2. The workpiece 111 moves relative to electrode wire feeder 102 and the second wire feeder 103 at a travel speed 303. The workpiece 111 may be moved while the electrode wire feeder 102 and the second wire feeder 103 remain stationary.

In some embodiments, the second wire feeder 103 may be moved independently from the electrode wire feeder 102. In some embodiments, the second wire feeder 103 and the electrode wire feeder 102 are positioned on a build head which may be moved as a unit. The build head may position the second wire feeder 103 and the electrode wire feeder 102 closer and further away from each other.

As discussed above, more than two wires may be utilized. For example, a single electrode wire may be used and then two cold wires may be fed into the weld pool. FIG. 6A is a schematic of a top down view of a multi-wire deposition system in accordance with an embodiment of the invention. The multi-wire deposition system includes an electrode wire 452. A voltage is applied to the electrode wire 452 to produce a weld pool 113. A second wire 454 may be fed into the weld pool 113 in a first direction 454a. A third wire 456 may be fed into the weld pool 113 in a second direction 456a. In some embodiments, the second wire 454 and the third wire 456 may be oriented in a 'V' shape with a certain angle between them. The inventors discovered that a smaller angle between the second wire 454 and the third wire 456 may be advantageous. However, there may be equipment limitations which may limit how small of an angle may be between the second wire 454 and the third wire 456.

In some embodiments, the second wire 454 and a third wire 456 may be in orientations which contact the weld pool 113 in parallel lines. The second wire 454 and the third wire 456 are cold wires not applied a voltage. In some embodiments, the third wire 456 may be preheated. The preheating may be performed by applying a voltage to the third wire 456.

FIG. 6B is a schematic of a multi-wire deposition system in accordance with an embodiment of the invention. The multi-wire deposition system includes an electrode wire 452. A voltage is applied to the electrode wire 452 to produce a weld pool 113. Multiple cold wires 458 may be fed into the weld pool 113. As illustrated, the multiple cold wires 458 may surround the electrode wire 452. Other orientations of the electrode wire 452 and the multiple cold wires 458 have been contemplated. Further, while 3 cold wires 458 are illustrated, there may be more or fewer cold wires such as 5 or 6 cold wires.

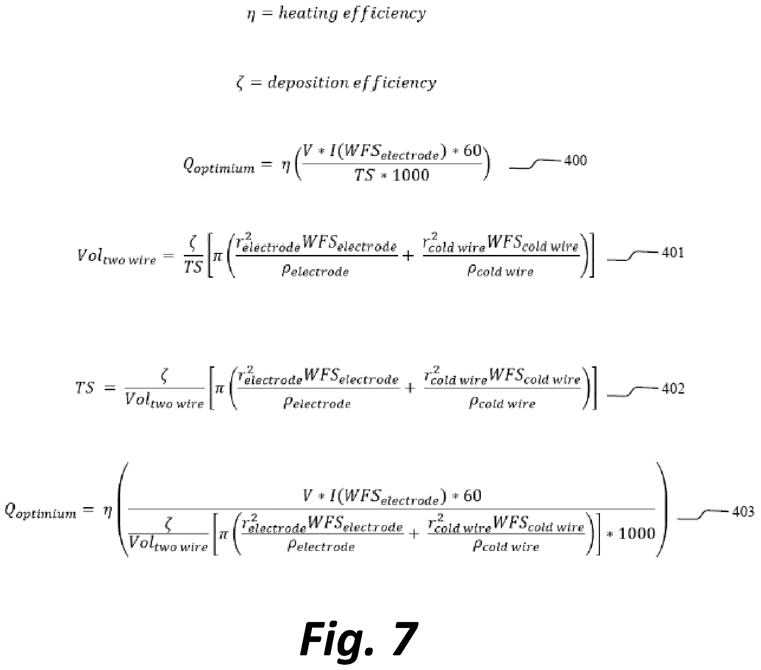

FIG. 7 is a diagram that illustrates equations that model a relationship between a Q value and other parameters of a two-wire deposition process. The heating efficiency, η, is a constant value that is a known property of the electrode wire. The heating efficiency may be determined experimentally if it is not known. The deposition efficiency, ζ, is a constant value that is a known property of the electrode wire. The deposition efficiency may be determined experimentally if it is not known. The input voltage, V, is the voltage supplied via the electric power source. The input current, I(WFS_{electrode}), is the electrode current. The input electric power is the input voltage multiplied by the input current. A power value can indicate the amount of input electric power provided by the electric power source. The power value can be calculated using measurements of the input voltage and the input current. As discussed above, the electrode current is a function of the first feed rate, WFS_{electrode}. As such, the power value is also a function of the first feed rate, WFS_{electrode}. The travel speed, TS, is the speed at which the weld pool is moved relative to a stationary point on the workpiece. In some embodiments, moving the electrode end moves the weld pool and moving the electrode wire feeder moves the electrode end. In some embodiments, the electrode end is generally stationary, and the workpiece moves (e.g., rotates) relative to the electrode end. In either case, TS can be the travel speed of the electrode wire feeder relative to the workpiece as one moves relative to the other. When a print head includes the electrode wire feeder, TS can be the travel speed of the print head relative to the workpiece. A first equation 400 can be used to calculate the Q value (Qₒₚₜᵢₘᵤₘ) as a function of the heating efficiency, the power value, and the travel speed.

The Q value may be interpreted as a value based on the amount of energy being deposited into the weld pool by the electrode wire. The Q value can be determined by the first equation 400. The first equation 400 does not reference the second wire, as such the Q value determined using the first equation 400 is not a function of the second feed rate or other parameters of the second wire. The second equation 401 can be used to determine the weight (ρ is used to indicate the density of a material) of the material deposited into the weld pool per unit length along the workpiece. The second equation 401 assumes wire with circular cross-sections. As such, the r² terms and the π outside the parentheses indicate that the area of a circular cross-section is multiplied by a length per unit time (WFS). Those practiced in geometrical calculations (e.g., most undergraduate engineers) realize that the second equation 401 may be adapted for embodiments using wires having non-circular cross-sections and to embodiments using additional wires such as a third wire, fourth wire, etc. Solving the second equation 401 for the travel speed, TS, produces the third equation 402. Replacing the travel speed, TS, in the first equation 400 with the right-side expression of the third equation 402 produces the fourth equation 403. The Q value can be determined using the first equation 400. Having determined the Q value, the fourth equation 403 may be used to determine the second wire feed rate, WFS_{cold wire}. According to the model, using the second feed rate for the second wire maximizes the material deposition rate. For example, a numerical method such as one of the many successive approximation methods may be used to determine WFS_{cold wire}. After using the model to determine the second wire feed rate, the second wire can be fed into the weld pool at the second wire feed rate to thereby maximize the material deposition rate according to the model. The material deposition rate is the sum of the electrode wire deposition rate and the second wire deposition rate. The electrode wire deposition rate is the rate at which the electrode wire deposits material into the weld pool. The second wire deposition rate is the rate at which the second wire deposits material into the weld pool.

In some cases, running below the maximal threshold and to an optimal feed rate may be advantageous. Thus, the equations in FIG. 7 are merely exemplary rather than a necessary criteria by which parameter feed rate is set.

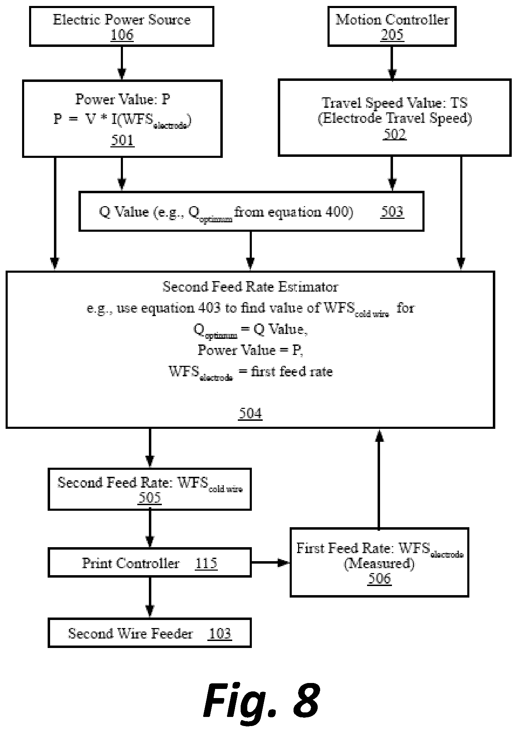

FIG. 8 is a high-level diagram illustrating a second feed rate estimator 504 that determines a feed rate for the second wire. A power value 501, P, can indicate the amount of input electric power produced by the electric power source 106. The travel speed value 502, TS, can indicate the speed at which the weld pool moves relative to the workpiece. TS can be measured by measuring the speed at which the weld pool, electrode end, electrode wire feeder, or print head is moved. TS may be a readable parameter provided by the motion controller 205 because the electrode end, electrode wire feeder, and print head are moved at a speed that is controlled by the motion controller 205. The first equation 400 can be used to determine the Q value 503 by using the power value 501, travel speed value 502, and constant values such as the heating efficiency. The constant values are values that are treated as nonchanging, or constant, during a printing operation (e.g., heating efficiency, deposition efficiency, electrode wire radius (r_{electrode}), second wire radius (r_{cold wire}), etc.) The second feed rate estimator 504 can use the fourth equation 403 to estimate the second feed rate 505, WFS_{cold wire}, based on current values of the Q value, power value, and first feed rate. The value determined for the second feed rate 505 can be sent to the print controller 115 such that the second wire feeder 103 feeds out the second wire at the second feed rate. The print controller may also provide the current value of the first feed rate 506. The first feed rate 506 can be a measured value determined by measuring the rate at which the electrode wire is fed in the weld pool. The first feed rate may be a readable parameter provided by the print controller 115 (or motion controller if the motion controller controls the wire feeders) when the electrode wire is fed at a speed that is controlled by the print controller 115.

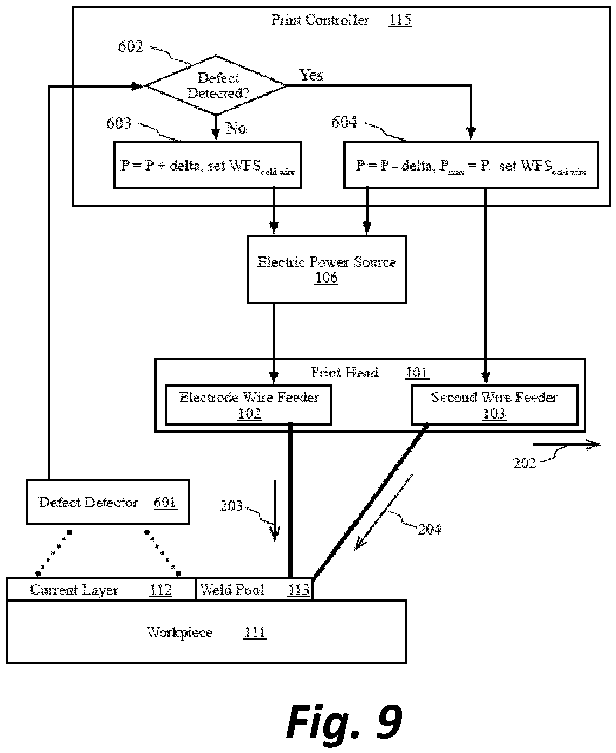

FIG. 9 is a high-level diagram that illustrates using a defect detector 601 to optimize input electric power. Those practiced in welding, steel construction, and related fields are familiar with a variety of defect detectors that can detect flaws in a weld. The defect detector may detect voids, metal dripping, weld spatter, and other defects when the printing process is producing a flawed workpiece. The defect detector 601 can send a defect detected signal to the print controller 115 when a defect is detected. The print controller 115 can implement a power adjustment process that adjusts the input electric power based on whether a defect is currently detected. At decision block 602, the power adjustment process can determine whether a defect is currently detected. If a defect is detected at decision block 602, the process can reduce the input electric power by a set amount, delta, may set a maximum power threshold value, Pₘₐₓ, and can set the second feed rate. Pₘₐₓ can indicate the maximum allowable input electric power. The second feed rate may be changed when the second feed rate is a function of input electric power, P. The second feed rate can also be a function of other parameters (e.g., travel speed, TS). If no defect is detected at decision block 602, the process can increase the input electric power by a set amount, delta, and can set the second feed rate. The input electric power may be limited such that it does not exceed Pₘₐₓ. The second feed rate may be changed when the second feed rate is a function of input electric power. The "delta" term indicates a value by which a parameter can be adjusted. The value used for a delta may be different in different settings (e.g., block 603 and block 604) and at different times. As discussed above, the second feed rate can be a function of parameters such as the input electric power. A model such as the model in FIG. 7 can be used to determine a new value for the second feed rate based on the new value for the input electric power. The print controller can adjust the printing process to use the new input electric power and the new second feed rate.

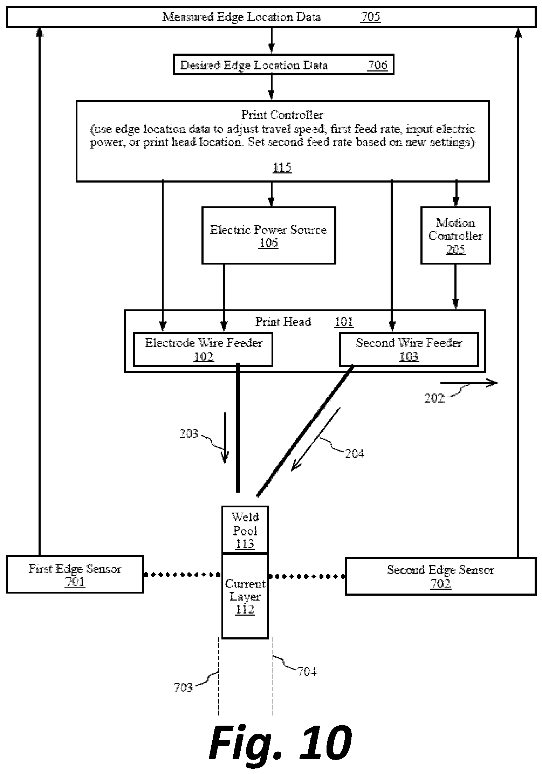

FIG. 10 is a high-level diagram that illustrates using edge sensors to optimize input electric power and other process parameters. A first edge sensor 701 and a second edge sensor 702 can produce measured edge location data 705 that indicates the locations of the edges of the current layer behind the weld pool. Desired edge location data 706 can indicate the locations where the edges should be. A first desired edge location 703 can indicate the desired location of the edge measured by the first edge sensor 701. A second desired edge location 704 can indicate the desired location of the edge measured by the second edge sensor 702. Comparing the measured edge location data 705 and the desired edge location data 706 may indicate that the current layer is shifted from its desired location. As such, the print controller may shift the print head such that the measured edge locations are at the desired edge locations.

Comparing the measured edge location data 705 and the desired edge location data 706 may indicate that the current layer is too thin. As such, the print controller may adjust the printing parameters such that more material is deposited per unit length (e.g., decrease TS). Comparing the measured edge location data 705 and the desired edge location data 706 may indicate that the current layer is too thick. As such, the print controller may adjust the printing parameters such that less material is deposited per unit length (e.g., increase TS). As discussed above, the second feed rate can be a function of parameters such as TS. A model such as the model in FIG. 7 can be used to determine a new value for the second feed rate based on the new value for the travel speed, TS. The print controller can adjust the printing process to use the new travel speed and the new second feed rate.

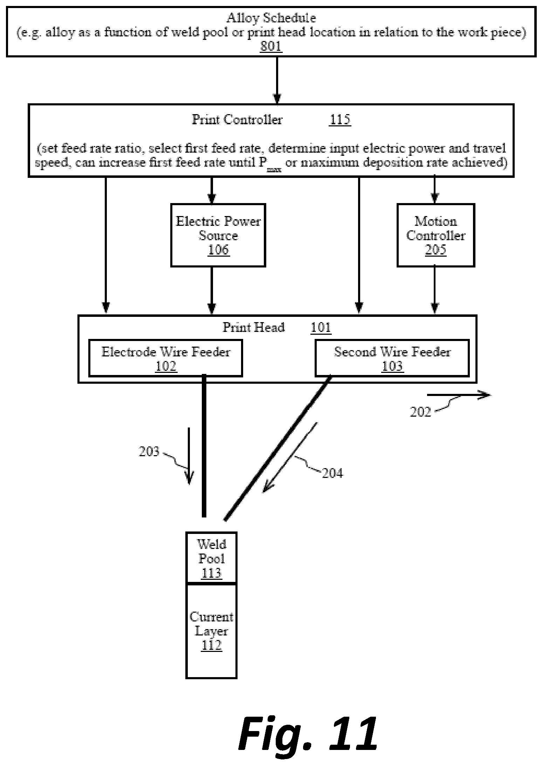

FIG. 11 is a high-level diagram that illustrates using an alloy schedule 801 to deposit different alloys at different locations in a structure. The alloy schedule can indicate the ratio of material to be deposited at different locations in the workpiece to thereby deposit a desired alloy at those locations. As such, the desired alloy can be a function of the weld pool location, electrode wire feeder locations, print head locations, etc. For example, depositing two units of material from the electrode wire and one unit of material from the second wire can produce a first alloy while depositing two units of material from the electrode wire and two units of material from the second wire can produce a second alloy. The alloy schedule 801 may indicate that the lowest meter of a cylindrical workpiece is to be the first alloy and that the second lowest meter is to be the second alloy. A mathematical model, such as that shown in FIG. 7, can be used to determine values for the input power, the travel speed, and the feed rates such that the desired alloy is produced. More specifically, for the first alloy 0.5*WFS_{electrode} can be used instead of WFS_{cold wire} in the fourth equation 403. A numerical method such as one of the many successive approximation methods may be used to determine values for the input electric power, travel speed, and WFS_{electrode} that produce the desired alloy. It may be necessary to iterate using both the first equation 400 and the fourth equation 403 to determine the values. Changes in a parameter (e.g., P due to detected defects or TS to adjust weld pool width) may require using the model to determine the other printing parameters.

Manufacturing a large-scale part in a vertical orientation may be impracticable in some instances. It may be possible to house printing in a facility tall enough to accommodate all vertically printed parts. For a 10-meter tall part, a building with greater than 10 meters of vertical open space would need to be utilized. When the large-scale part is very tall, such as in the case of a rocket, when printed in a vertical orientation, the vertical height of the part can exceed the vertical open space of an industrial factory. Accordingly, it can be advantageous to be able to print parts in a horizontal orientation. When printing in a horizontal orientation, instead of a 10-meter-tall building, a 10-meter-long building could be used to accommodate the printing process. Further, when printing in a horizontal orientation, the effects of gravity may make certain orientations of the print head and the workpiece more beneficial. As described in greater detail in U.S. Patent Application No. 18/352,992, entitled "Systems for Horizontal Additive Manufacturing and Methods Thereof" and filed July 14, 2023, positioning the build head along the horizontal meridian of a circular build plate, e.g., at a 9 o'clock position if the circular build plate is analogized to a clock face, allows gravity to be in line with the travel direction of the workpiece when the workpiece mounted to the build plate is rotated in a clockwise direction. Likewise, in cases where the workpiece is rotated in a counter-clockwise direction, positioning the build head at a 3 o'clock position allows gravity to be in line with the travel direction of the workpiece.

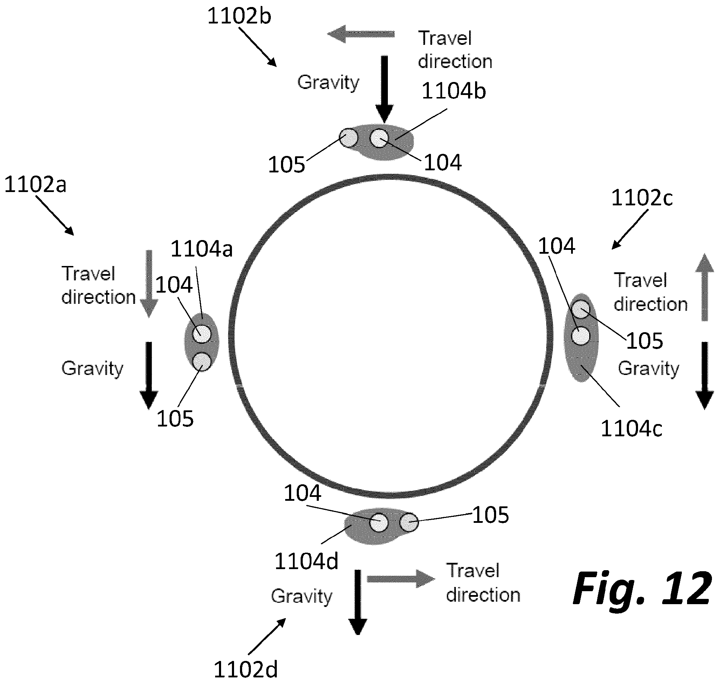

FIG. 12 schematically illustrates different positionings of the print head with respect to the workpiece to demonstrate the effects of gravity on the melt pool. In a horizontal meridian print position 1102a (e.g. an 9 o'clock print position), gravity is in line with the travel direction of the workpiece when the workpiece is rotated in a clockwise direction. Thus, the electrode wire 104 melts into a weld pool 1104a, the weld pool 1104a is more compact and hotter which allows the second wire 105 to melt easier. In comparison, when the print head is in a vertical meridian print position 1102b (e.g. 12 o'clock position), the weld pool 1104b is distorted because gravity is perpendicular to the travel direction. Similarly, when the print head is in the 6 o'clock position 1102d, the weld pool 1104d is distorted because gravity is perpendicular to the travel direction. The distortion when the print head is in the 12 o'clock or 6 o'clock position may produce nonuniform/asymmetric deposition. Further, when the print head is in the 3 o'clock position 1102c, the travel direction is opposite gravity and thus the weld pool 1104c is elongated. The elongated weld pool 1104c may disperse the heat of the weld pool 1104c which may make it more difficult to melt the second wire 105.

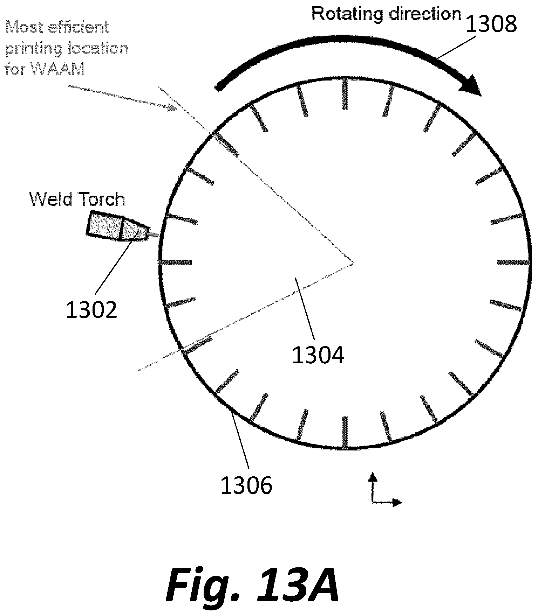

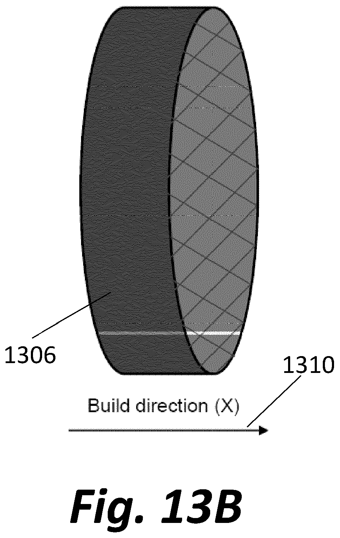

FIG. 13A illustrates a schematic of a system for printing with a print head in accordance with an embodiment of the invention. As illustrated, the print head 1302 may be used to print on a workpiece 1306 with the workpiece 1306 being rotated in a clockwise direction 1308. The print head 1302 may be located in a certain orientation 1304 which allows gravity to be substantially aligned with the travel direction of the print head 1302. As illustrated, the orientation 1304 may place the print head 1302 at the 9 o'clock orientation with respect to the workpiece 1306. FIG. 13B illustrates a schematic perspective view of the workpiece 1306 during building with the system of FIG. 13A. The workpiece 1306 includes a horizontal build direction 1310 which may be advantageous for certain high aspect ratio prints.

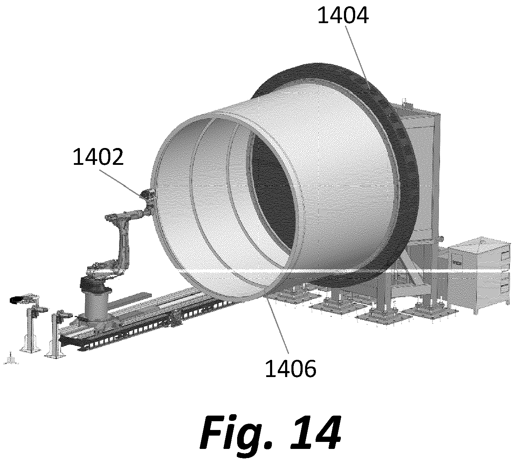

FIG. 14 is a perspective view of a schematic of an example horizontal print system. The system includes a print head 1402 which prints a workpiece 1406 on top of a build plate 1404. Examples of the build plate 1404 are described in U.S. Patent Application No. 18/352,995, entitled "Horizontal Metal 3-D Printer Build Plate" and filed on July 14, 2023. Further, examples of a horizontal print cell including the build plate 1404 are described in U.S. Patent Application No. 18/352,992. The build plate 1404 may be rotated in a clockwise direction during the build process in order to move the weld pool across the workpiece 1406. As illustrated, the print head 1402 may be positioned to print the workpiece 1406 on the build plate 1404 at a position on the build plate's horizontal meridian (e.g. an 9 o'clock orientation). As discussed previously, this allows the travel direction to align with the direction of gravity.

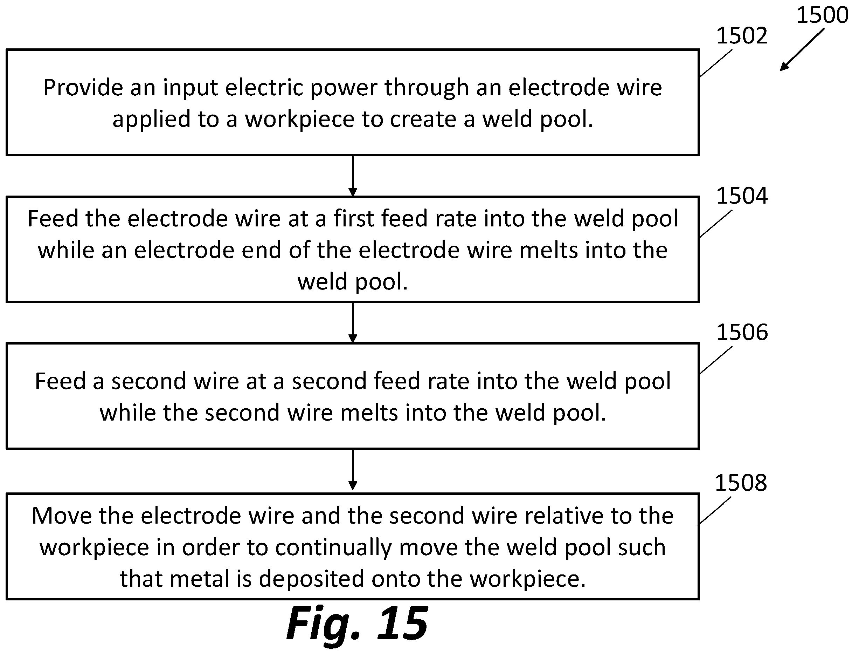

FIG. 15 is a flow chart of a method 1500 for depositing material using multiple feed wires. The method 1500 includes providing (1502) an input electric power through an electrode wire applied to a workpiece to create a weld pool. The voltage can create a current which flows through the electrode wire onto the workpiece. At the interface of the electrode wire and the workpiece there may be heat which melts the electrode wire to create the weld pool.

The method further includes feeding (1504) the electrode wire at a first feed rate into the weld pool while an electrode end of the electrode wire melts into the weld pool. The heat of the weld pool melts the electrode wire. The faster the first feed rate the more power is applied to the weld pool which increases the heat in the weld pool. Increased heat may create defects in the deposited metal which may be disadvantageous.

The method further includes feeding (1506) a second wire at a second feed rate into the weld pool while the second wire melts into the weld pool. The second wire may be a cold wire and thus no voltage may be applied to the second wire. The heat in the weld pool may be used to melt the second wire without adding additional heat to the deposition process. Thus, the second feed rate of the second wire may be used to balance the first feed rate of the electrode wire to decrease the number of defects while increasing deposition speed.

The method further includes moving (1508) the electrode wire and the second wire relative to the workpiece in order to continually move the weld pool such that metal is deposited onto the workpiece. As discussed above, such relative movement encompasses maintaining the electrode wire and the second wire generally stationary while the workpiece is rotated thus creating a travel direction for the electrode wire and the second wire relative to the workpiece. The workpiece may be rotated in a clockwise direction. The electrode wire and the second wire may be positioned along the build plate's a horizontal meridian (e.g. an 9 o'clock position relative to the workpiece). The weld pool solidifies to form the deposited metal. The deposited metal may form a printed part.

During deposition, the high energies created through the electrode wire 104 and/or the second wire 105 may create sputtering and/or smoking which can create ventilation problems that may necessitate frequent shutdowns. The sputtering and/or smoking may deposit unwanted material onto the shield gas nozzle around the electrode wire 104 which may need to be periodically removed. It may be advantageous to coat the shield gas nozzle in a coating such as boron nitride or graphite to keep the unwanted material from sticking to the shield gas nozzle. The coating may make the sputter residue less likely to stick to the shield gas nozzle which may make allow the system to be easily cleared with a simple gas purge of the system. The shield gas nozzle may have a coaxial shape so that the radius and volume of the shield gas is increased, mitigating the shadowing due to the second wire 105. In this regard, U.S. Patent Application No. 18/330,987, filed June 7, 2023, describes an example shield gas nozzle that includes a concentric or coaxial cylinder and illustrates an example configuration in at least Figs. 7A, 7B, and 8F and their corresponding disclosure.

Although the operations of the method(s) herein are shown and described in a particular order, the order of the operations of each method may be altered so that certain operations may be performed in an inverse order or so that certain operations may be performed, at least in part, concurrently with other operations. Instructions or suboperations of distinct operations may be implemented in an intermittent and/or alternating manner.

It should also be noted that at least some of the operations for the methods described herein may be implemented using software instructions stored on a computer usable storage medium for execution by a computer. As an example, an embodiment of a computer program product includes a computer usable storage medium to store a computer readable program.

The computer-usable or computer-readable storage medium can be an electronic, magnetic, optical, electromagnetic, infrared, or semiconductor system (or apparatus or device). Examples of non-transitory computer-usable and computer-readable storage media include a semiconductor or solid-state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Although specific embodiments of the invention have been described and illustrated, the invention is not to be limited to the specific forms or arrangements of parts so described and illustrated. Notably, all references to wire arc additive manufacturing in this application are provided as an example and should not be construed as limiting. The inventive concepts in this application are applicable to any Directed Energy Deposition (DED) 3D printing process that uses wire feedstock. Relevant energy sources are plasma, arc, laser, and others. The scope of the invention is to be defined by the claims appended hereto and their equivalents.

## Claims

1. An additive manufacturing system comprising:
an electrode wire (104)
an electric power source (106) configured to provide an input electric power through the electrode wire to create a weld pool (113) on a workpiece (111);
an electrode wire feeder (102) configured to feed the electrode wire into the weld pool at a first feed rate while an electrode wire end melts into the weld pool;
a cold wire (105) not carrying, in use, electrical energy;
a cold wire feeder (103) configured to feed the cold wire into the weld pool at a second feed rate while a cold wire end melts into the weld pool,
**characterized in that**
the electrode wire (104) and the cold wire (105) comprise aluminum;
and **in that**
the cold wire end is positioned ahead of the electrode wire end such that, as the electrode wire feeder and the cold wire feeder move with respect to the workpiece, the cold wire end leads the electrode wire end.

2. The system of claim 1, wherein the cold wire feeder is configured to feed the cold wire end at a position ahead of the electrode wire end such that the cold wire end is fed into a front edge of the weld pool.

3. The system of claim 1, further comprising a shield gas nozzle configured to introduce a shield gas during deposition of the weld material.

4. The system of any of claims 1 to 3, wherein an insertion angle (208) of the cold wire end is between 10 degrees and 20 degrees with respect to the workpiece.

5. The system of claim 4, further comprising a shield gas nozzle configured to introduce a shield gas during deposition of the weld material.

6. The system of claim 5, wherein the shield gas nozzle has a coaxial shape so that the radius and volume of the shield gas is increased.

7. The system of claim 5 or 6, wherein the shield gas nozzle includes a coating.

8. The system of claim 7, wherein coating mitigates sticking of material to the shield gas nozzle from sputtering and/or smoking from the weld pool during deposition.

9. The system of claim 7 or 8, wherein the coating comprises boron nitride and/or graphite.

10. The system of any of claims 1 to 9, wherein the cold wire feeder is further configured to position the cold wire such that it substantially contacts the workpiece ahead of the electrode wire end and ahead of the electrode wire such that the cold wire end is fed ahead of the weld pool and the weld pool is moved onto the cold wire end as the weld pool moves.

11. The system of any of claims 1 to 10, further comprising one or more positioning sensors to monitor the positioning of the electrode wire.

12. The system of claim 11, wherein the one or more positioning sensors comprises an optical sensor for monitoring the axial positioning of the electrode wire with respect to the workpiece.

13. The system of claim 11 or 12, wherein the one or more positioning sensors comprises a force sensor configured to monitor the axial positioning of the electrode wire with respect to the workpiece.

14. The system of any of claims 11 to 13, wherein the one or more positioning sensors comprises a thickness sensor configured to monitor the radial positioning of the electrode wire with respect to the workpiece.

15. The system of claim 14, wherein the thickness sensor comprises a laser profile scanner.

## Patentansprüche

1. Additives Fertigungssystem, umfassend:
einen Elektrodendraht (104)
eine elektrische Leistungsquelle (106), die konfiguriert ist, um eine elektrische Eingangsleistung durch den Elektrodendraht bereitzustellen, um ein Schweißbad (113) auf einem Werkstück (111) zu schaffen;
einen Elektrodendrahtvorschub (102), der konfiguriert ist, um den Elektrodendraht mit einer ersten Vorschubgeschwindigkeit in das Schweißbad vorzuschieben, während ein Elektrodendrahtende in das Schweißbad hinein schmilzt;
einen Kaltdraht (105), der, in Verwendung, keine elektrische Energie führt;
einen Kaltdrahtvorschub (103), der konfiguriert ist, um den Kaltdraht mit einer zweiten Vorschubgeschwindigkeit in das Schweißbad vorzuschieben, während ein Kaltdrahtende in das Schweißbad hinein schmilzt,
**dadurch gekennzeichnet, dass**
der Elektrodendraht (104) und der Kaltdraht (105) Aluminium umfassen;
und dadurch, dass
das Kaltdrahtende derart vor dem Elektrodendrahtende positioniert ist, dass, wenn sich der Elektrodendrahtvorschub und der Kaltdrahtvorschub in Bezug auf das Werkstück bewegen, das Kaltdrahtende dem Elektrodendrahtende vorausgeht.

2. System nach Anspruch 1, wobei der Kaltdrahtvorschub konfiguriert ist, um das Kaltdrahtende derart an einer Position vor dem Elektrodendrahtende vorzuschieben, dass das Kaltdrahtende in eine Vorderkante des Schweißbads vorgeschoben wird.

3. System nach Anspruch 1, ferner umfassend eine Schutzgasdüse, die konfiguriert ist, um während einer Abscheidung des Schweißwerkstoffs ein Schutzgas einzuleiten.

4. System nach einem der Ansprüche 1 bis 3, wobei ein Einführungswinkel (208) des Kaltdrahtendes in Bezug auf das Werkstück zwischen 10 Grad und 20 Grad liegt.

5. System nach Anspruch 4, ferner umfassend eine Schutzgasdüse, die konfiguriert ist, um während der Abscheidung des Schweißwerkstoffs ein Schutzgas einzuleiten.

6. System nach Anspruch 5, wobei die Schutzgasdüse eine koaxiale Form aufweist, sodass der Radius und das Volumen des Schutzgases vergrößert werden.

7. System nach Anspruch 5 oder 6, wobei die Schutzgasdüse eine Beschichtung einschließt.

8. System nach Anspruch 7, wobei die Beschichtung ein Anhaften von Werkstoff an der Schutzgasdüse durch ein Spritzen und/oder ein Rauchen aus dem Schweißbad während der Abscheidung mindert.

9. System nach Anspruch 7 oder 8, wobei die Beschichtung Bornitrid und/oder Graphit umfasst.

10. System nach einem der Ansprüche 1 bis 9, wobei der Kaltdrahtvorschub ferner konfiguriert ist, um den Kaltdraht derart zu positionieren, dass dieser das Werkstück vor dem Elektrodendrahtende und vor dem Elektrodendraht derart im Wesentlichen kontaktiert, dass das Kaltdrahtende vor dem Schweißbad vorgeschoben wird und das Schweißbad auf das Kaltdrahtende bewegt wird, während sich das Schweißbad bewegt.

11. System nach einem der Ansprüche 1 bis 10, ferner umfassend einen oder mehrere Positionierungssensoren, um das Positionieren des Elektrodendrahts zu überwachen.

12. System nach Anspruch 11, wobei der eine oder die mehreren Positionierungssensoren einen optischen Sensor zum Überwachen des axialen Positionierens des Elektrodendrahts in Bezug auf das Werkstück umfassen.

13. System nach Anspruch 11 oder 12, wobei der eine oder die mehreren Positionierungssensoren einen Kraftsensor umfassen, der konfiguriert ist, um das axiale Positionieren des Elektrodendrahts in Bezug auf das Werkstück zu überwachen.

14. System nach einem der Ansprüche 11 bis 13, wobei der eine oder die mehreren Positionierungssensoren einen Dickesensor umfassen, der konfiguriert ist, um das radiale Positionieren des Elektrodendrahts in Bezug auf das Werkstück zu überwachen.

15. System nach Anspruch 14, wobei der Dickesensor einen Laserprofil-Scanner umfasst.

## Revendications

1. Système de fabrication additive comprenant :
un fil-électrode (104)
une source d'alimentation électrique (106) configurée pour fournir une alimentation électrique d'entrée par le biais du fil-électrode afin de créer un bain de fusion (113) sur une pièce à usiner (111) ;
un dispositif d'alimentation en fil-électrode (102) configuré pour alimenter le fil-électrode dans le bain de fusion à une première vitesse d'alimentation pendant qu'une extrémité de fil-électrode fond dans le bain de fusion ;
un fil froid (105) ne transportant pas, en cours d'utilisation, d'énergie électrique ;
un dispositif d'alimentation en fil froid (103) configuré pour alimenter le fil froid dans le bain de fusion à une seconde vitesse d'alimentation pendant que le fil froid fond dans le bain de fusion, **caractérisé en ce que**
le fil-électrode (104) et le fil froid (105) comprennent de l'aluminium ;
et **en ce que**
l'extrémité de fil froid est positionnée en amont de l'extrémité de fil-électrode de telle sorte que, lorsque le dispositif d'alimentation en fil-électrode et le dispositif d'alimentation en fil froid se déplacent par rapport à la pièce à usiner, l'extrémité de fil froid mène l'extrémité de fil-électrode.

2. Système selon la revendication 1, dans lequel le dispositif d'alimentation en fil froid est configuré pour alimenter l'extrémité de fil froid au niveau d'une position en amont de l'extrémité de fil-électrode de telle sorte que l'extrémité de fil froid est alimentée dans un bord avant du bain de fusion.

3. Système selon la revendication 1, comprenant en outre une buse de gaz de protection conçue pour introduire un gaz de protection pendant un dépôt du matériau de fusion.

4. Système selon l'une quelconque des revendications 1 à 3, dans lequel un angle d'insertion (208) de l'extrémité de fil froid est compris entre 10 degrés et 20 degrés par rapport à la pièce à usiner.

5. Système selon la revendication 4, comprenant en outre une buse de gaz de protection conçue pour introduire un gaz de protection pendant un dépôt du matériau de fusion.

6. Système selon la revendication 5, dans lequel la buse de gaz de protection a une forme coaxiale, de sorte que le rayon et le volume du gaz de protection sont augmentés.

7. Système selon la revendication 5 ou 6, dans lequel la buse de gaz de protection comporte un revêtement.

8. Système selon la revendication 7, dans lequel le revêtement atténue une adhérence du matériau à la buse de gaz de protection contre des pulvérisations et/ou de la fumée du bain de fusion pendant un dépôt.

9. Système selon la revendication 7 ou 8, dans lequel le revêtement comprend du nitrure de bore et/ou du graphite.

10. Système selon l'une quelconque des revendications 1 à 9, dans lequel le dispositif d'alimentation en fil froid est en outre configuré pour positionner le fil froid de telle sorte qu'il entre sensiblement en contact avec la pièce à usiner en amont de l'extrémité de fil-électrode et en amont du fil-électrode de telle sorte que l'extrémité de fil froid est alimentée en amont du bain de fusion et que le bain de fusion est déplacé sur l'extrémité de fil froid à mesure que le bain de fusion se déplace.

11. Système selon l'une quelconque des revendications 1 à 10, comprenant en outre un ou plusieurs capteurs de positionnement pour surveiller le positionnement du fil-électrode.

12. Système selon la revendication 11, dans lequel le ou les capteurs de positionnement comprennent un capteur optique pour surveiller le positionnement axial du fil-électrode par rapport à la pièce à usiner.

13. Système selon la revendication 11 ou 12, dans lequel le ou les capteurs de positionnement comprennent un capteur de force configuré pour surveiller le positionnement axial du fil-électrode par rapport à la pièce à usiner.

14. Système selon l'une quelconque des revendications 11 à 13, dans lequel le ou les capteurs de positionnement comprennent un capteur d'épaisseur configuré pour surveiller le positionnement radial du fil-électrode par rapport à la pièce à usiner.

15. Système selon la revendication 14, dans lequel le capteur d'épaisseur comprend un dispositif de balayage de profil laser.
